## Europäisches Patentamt

## European Patent Office

## Office européen des brevets

(11) Veröffentlichungsnummer: **0 081 792**
**B1**

# (12) EUROPÄISCHE PATENTSCHRIFT

(45) Veröffentlichungstag der Patentschrift:
08.06.88

(51) Int. Cl.⁴: **B 60 C 27/06,** B 60 C 27/14

(21) Anmeldenummer: **82111299.2**

(22) Anmeldetag: **07.12.82**

(54) Gleitschutzkette für Fahrzeugräder.

(30) Priorität: 11.12.81 DE 3149237
07.07.82 DE 3225318

(43) Veröffentlichungstag der Anmeldung:
22.06.83 Patentblatt 83/25

(45) Bekanntmachung des Hinweises auf die Patenterteilung:
08.06.88 Patentblatt 88/23

(84) Benannte Vertragsstaaten:
AT BE CH DE FR GB IT LI LU NL SE

(56) Entgegenhaltungen:
DE-B-2 645 891
FR-A-2 463 014
US-A-2 806 392

(73) Patentinhaber: **Firma August Thiele, Leckingser Strasse 207, D-5860 Iserlohn- Kalthof (DE)**

(72) Erfinder: **Freisenhausen, Karl, Nikolaus- Ehlen- Strasse 13, D-5860 Iserlohn (DE)**

(74) Vertreter: **Schwarz, Klaus- Jürgen, Dipl.- Ing., Adenauerallee 46a, D-5300 Bonn 1 (DE)**

## Beschreibung

Die Erfindung betrifft eine Gleitschutzkette für Fahrzeugräder nach dem Oberbegriff des Anspruches 1.

Bei einer derartigen bekannten Gleitschutzkette (DE-U-8022 174) kann der Haltering an der Reifeninnenseite mittels Karabinerhaken und starrer Öse geöffnet und geschlossen werden, während die Verbindungen auf der Radvorderseite nur aus Kettengliedern bestehen, die mittels Haken und Öse geöffnet und geschlossen werden können.

Bei der Montage derartiger Gleitschutzketten ist der Karabinerhaken an der Reifeninnenseite nur sehr schwer zugänglich und kann auch nur äußerst umständlich an der Öse am gegenüberliegenden Ende des Halteringes geschlossen und ebenso schwierig geöffnet werden, während an der Reifenaußenseite ein starker zusätzlicher Gummiring und mehrere Haken erforderlich sind, um die Kette auszurichten und im Zentrum des Rades zu spannen.

Der Erfindung liegt die Aufgabe zugrunde, eine derartige Gleitschutzkette zur Erleichterung der · Montage so auszubilden, daß die Hakenverbindung an der Reifeninnenseite ohne Schwierigkeiten geschlossen und geöffnet werden kann.

Diese Aufgabe findet ihre Lösung gemäß der Erfindung im wesentlichen durch den Kennzeichnungsteil des Anspruches 1, während in den Ansprüchen 2 bis 12 besonders vorteilhafte Weiterbildungen der Erfindung gekennzeichnet sind.

Durch die Erfindung ist eine wendbare Gleitschutzkette zur Schnellmontage geschaffen worden, die gegenüber den bekannten Schnellmontageketten geschlossener Bauart den Vorteil hat, daß bei ihr keine Spannketten über die Reifenlauffläche führen und somit auch nicht eine Verwirrung der Kettennetze bei der Montage verursachen können. Auch ergeben sich keine Schwierigkeiten beim Schließen und Öffnen der Hakenverbindung des federnden Halteringes an der Reifeninnenseite. Vielmehr kann das hakenförmig umgebogene freie Ende des federnden Halteringes einfach an der innenliegenden Reifenflanke entlang in die trichterförmig aufgeweitete Einhängeöffnung der Einhängehülse am gegenüberliegenden Ende des Halteringes eingeführt werden. Da die Spannung des als Federstahlbügel ausgebildeten Halteringes nach außen gerichtet ist, rastet die Hakenverbindung von selbst ein und kann durch einfaches Zusammendrücken des Halteringes und Aushängen des hakenförmigen Endes aus der Einhängehülse ebenso leicht wieder geöffnet werden. Die Einhängehülse kann sehr schmal gehalten werden und steht durch ihre geringe Breite nur wenig über die Reifeninnenseite hervor. Beim Wenden der Kette sind keine die Öffnung des Halteringes überbrückenden Kettenteile hinderlich. Außerdem wird durch die Einhängehülse ein wirksamer Schutz der Hakenverbindung gegen Beschädigungen im Fahrbetrieb erreicht.

Durch das Merkmal des Anspruches 2 ergibt sich der weitere Vorteil, daß die Einhängehülse nur mit der Einhängeöffnung für das hakenförmig umgebogene lösbare Ende des Halteringes hergestellt und sodann einfach auf das gegenüberliegende ebenfalls hakenförmig umgebogene Ende des Halteringes drehsicher aufgepreßt wird. Am Hülsenschaft selbst sind weder eine Einhängeöse für den danebenliegenden Seitenhaken des Kettennetzes noch sonstige Maßnahmen erforderlich. Der benachbarte Seitenhaken kann daher entweder schon vor dem Aufpressen der Einhängehülse auf das hakenförmig umgebogene Ende auf den Haltering aufgeschoben oder auch erst nach der Befestigung der Einhängehülse um den Haltering herumgelegt werden. Außerdem ergibt sich der weitere Vorteil, daß das gesamte Kettennetz der Gleitschutzkette um den Haltering verdreht werden kann, so daß die Kette wendbar ist.

Durch den Anspruch 3 wird erreicht, daß die beiden gegenüberliegenden Enden des Halteringes einander in der Verschlußstellung im gleichen radialen Abstand von der Radmitte gegenüberliegen, so daß die Einhängehülse im wesentlichen auf Zug, jedoch kaum auf Knickung oder Abscheren beansprucht wird. Außerdem erleichtert das umgebogene Ende des Halteringes als Anschlag das Einrasten des gegenüberliegenden Hakenendes in die Einhängeöffnung an der Einhängehülse.

Dadurch, daß die Einhängehülse gemäß Anspruch 4 zweiteilig ausgebildet ist, wird sowohl die Herstellung als auch die Montage der Einhängehülse vereinfacht und verbessert. Der Schaftteil und der Auffangtrichter der Einhängehülse können unabhängig voneinander hergestellt und bereits vor der Befestigung am Haltering oder auch danach miteinander verbunden werden. Bei einer nachträglichen Befestigung des Auffangtrichters am Schaftteil der Einhängehülse wird insbesondere die Gefahr vermieden, daß der Auffangtrichter bei der Befestigung des Schaftteiles am Haltering beschädigt oder mit verformt wird. Eine besonders einfache und sichere Verbindung des Auffangtrichters mit dem Schaftteil der Einhängehülse wird durch das Merkmal des Anspruches 5 erreicht, während das Merkmal des Anspruches 6 ein besonders einfaches Einführen des lösbaren hakenförmigen Endes des Halteringes und ein besseres Einrasten in die Einhängeöffnung an der Einhängehülse ermöglicht. Die Befestigungstülle des Auffangtrichters kann dabei zugleich den vorderen Abschluß der Einhängeöffnung am Schaftteil der Einhängehülse bilden. Auffangtrichter und Schaftteil der Einhängehülse sind vorteilhafterweise durch Punktschweißung miteinander verbunden.

Der für einen gleichmäßigen Ablauf derartiger Gleitschutzketten im Hakenbereich des Halteringes erforderliche enge Schluß des Kettennetzes kann nach Anspruch 9 noch dadurch verbessert werden, daß zum hakenförmig umgebogenen Ende des Halteringes hin ein Anschlagring für den daneben befindlichen Seitenhaken des Kettennetzes angeordnet ist, so daß dieser Seitenhaken so dicht wie nur irgend möglich an das freie Hakenende des Halteringes herangeführt werden kann, ohne den Schließvorgang des Halteringes zu behindern.

Das Spannen der Gleitschutzkette kann gemäß Anspruch 10 noch dadurch verbessert werden, daß an der Reifenaußenseite neben der Seitenkette eine Spannkette mit einem neben der Hakenverbindung der Seitenkette liegenden hakenförmigen Spannhebel vorgesehen ist. Die Spannkette weist dabei einen endseitigen Sicherungsring auf und ist an der Seitenkette im wesentlichen über deren gesamte Länge unverlierbar montiert, so daß die Spannkette sich beim Wenden des Kettennetzes nicht verspannen und auch nicht abhanden kommen kann, da sie sich im bereits vormontierten Zustande nur an der Reifenaußenseite befindet. Die Spannkette kann dadurch auch aus größeren Gliedern bestehen, als wenn sie durch enge Führungsösen am Reifenumfang und an den Reifenflanken hindurchgeführt werden müßte.

Der Doppelhaken nach Anspruch 12 ermöglicht schließlich eine besonders einfache Fertigung derartiger Schnellmontageketten und trägt zu deren einfacher Montage ebenso wie zur Laufruhe der Ketten maßgeblich bei, indem er auch an der Reifenaußenseite einen gleichmäßigen Abstand der Kettennetze im Verbindungsbereich der Kette bewirkt.

Weitere Einzelheiten und Vorteile der Erfindung ergeben sich aus der folgenden Beschreibung von in der Zeichnung schematisch dargestellten bevorzugten Ausführungsbeispielen. Es zeigen

Fig. 1 eine perspektivische Draufsicht auf eine Gleitschutzkette bei der Montage an einem Fahrzeugrad,

Fig. 2 eine zugehörige Ansicht des an der Reifeninnenseite liegenden Halteringes der Gleitschutzkette bei der Montage,

Fig. 3 eine Ansicht des an der Reifenaußenseite befindlichen Teiles der Gleitschutzkette vor dem Schließen des Kettennetzes,

Fig. 4 eine Teilansicht des geschlossenen Halteringes an der Reifeninnenseite,

Fig. 5 eine weitere Teilansicht der geschlossenen Gleitschutzkette von der Reifenaußenseite her gesehen,

Fig. 6 eine gegenüber Fig. 1 bis 5 vergrößerte Teil-Seitenansicht der Hakenverbindung am Haltering der Gleitschutzkette,

Fig. 7 eine Draufsicht auf Fig. 6,

Fig. 8 einen Schnitt durch die Hakenverbindung gemäß Schnittlinie VIII - VIII von Fig. 7 und

Fig. 9 eine perspektivische Darstellung des Hakenverschlusses beim Schließen des Halteringes mit den beiderseits des Verschlusses am Haltering drehbar angeordneten Seitenhaken des Kettennetzes.

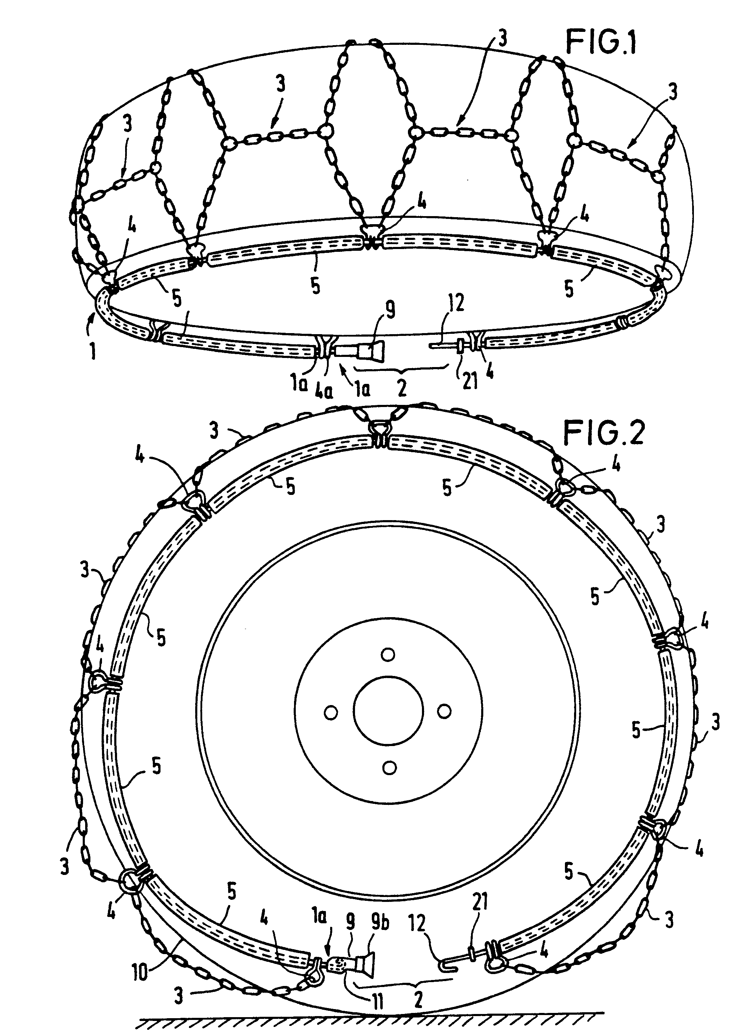

In Fig. 1 bis 5 ist eine Gleitschutzkette in Form einer Spurkreuzkette für Fahrzeugräder mit einem an der Reifeninnenseite angeordneten Haltering 1 aus Federstahldraht gezeigt, der an einer Stelle offen ist und durch eine Hakenverbindung 2 geschlossen werden kann. An dem Haltering 1 sind die Netzteile 3 der Kette mittels Seitenhaken 4 aufgereiht und werden durch Schlauchstücke 5 aus Kunststoff, die auf den Haltering 1 aufgeschoben sind, in gleichmäßigem Abstand gehalten. An der Reifenaußenseite sind die Netzteile 3 mit Seitenhaken 6 in eine Seitenkette 7 eingehängt, die durch eine Hakenverbindung 8 geschlossen werden kann.

Der Haltering 1 weist an seinem einen Ende 1a eine an der Reifeninnenseite anliegende, an ihrem offenen Ende trichterförmig nach außen aufgeweitete Einhängehülse 9 mit einer zum Reifenumfang 10 (Fig. 2) gerichteten Einhängeöffnung 11 für das zum Reifenumfang 10 hakenförmig nach außen umgebogene andere Ende 12 des unter Federspannung stehenden Halteringes 1 auf. Das hakenförmig umgebogene Ende 12 liegt bei der Montage an der inneren Reifenflanke an und wird durch Zusammendrücken des Halteringes 1 in die Einhängehülse 9 eingeführt, um nach Erreichen der Einhängeöffnung 11 in diese nach außen einzurasten und die Hakenverbindung 2 zu schließen.

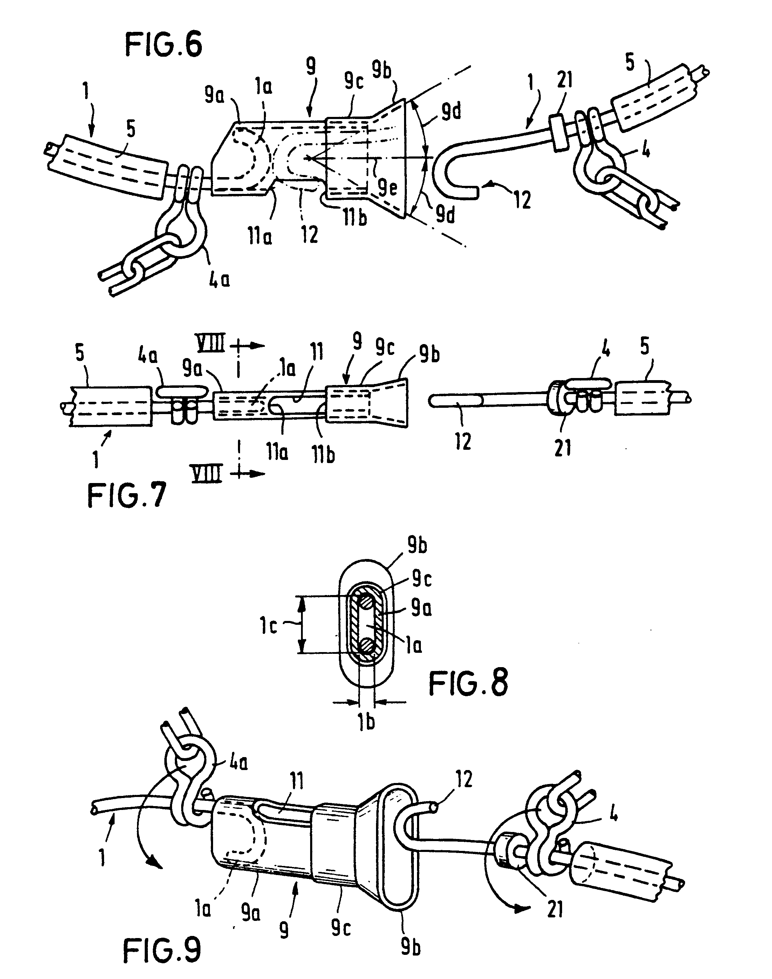

Wie in Fig. 6 bis 9 im einzelnen zu erkennen ist, weist der Haltering 1 auch an seinem gegenüberliegenden Teil ein im wesentlichen hakenförmig umgebogenes Ende 1a zur drehfesten Verbindung mit der Einhängehülse 9 auf, dessen Scheitelpunkt etwa bis zum rückwärtigen Ende 11a der Einhängeöffnung 11 in den Schaft der Einhängehülse 9 hineinragt und zum Inneren des Halteringes 1 hin umgebogen ist.

Die Einhängehülse 9 ist entsprechend der Materialdicke 1b und dem Bogenaußendurchmesser 1c des in den Hülsenschaft hineinragenden umgebogenen Endes 1a des Halteringes 1 mit einem im wesentlichen ovalen Innenquerschnitt ausgebildet und auf das umgebogene Ende 1a des Halteringes 1 aufgepreßt (Fig. 8). Der benachbarte Seitenhaken 4a des Kettennetzes ist auf dem Haltering 1 neben der Einhängehülse 9 frei drehbar angeordnet.

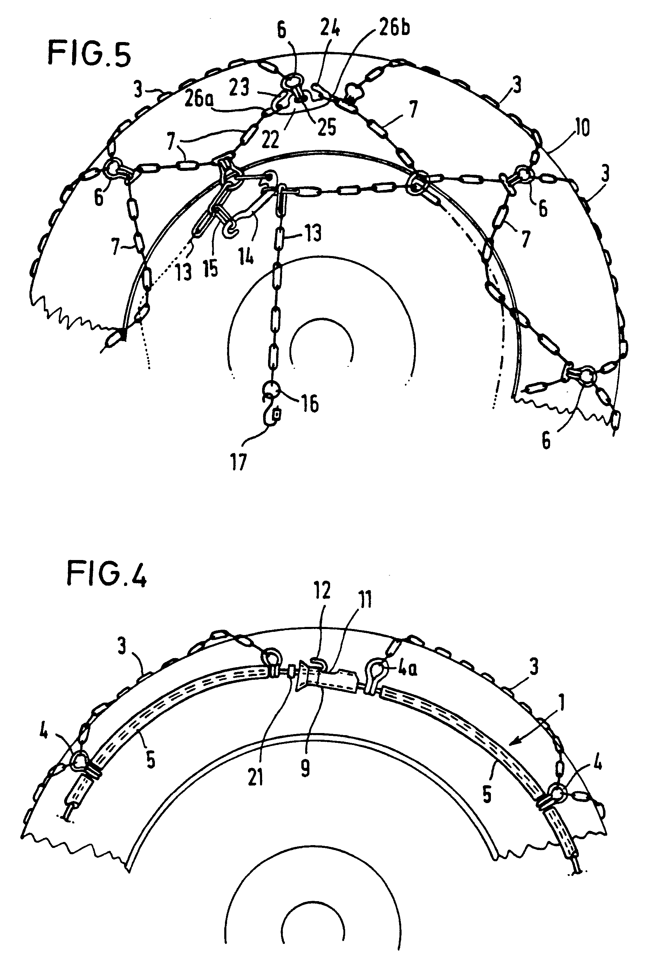

Wie Fig. 5 bis 9 weiterhin erkennen lassen, ist die Einhängehülse 9 zweiteilig ausgebildet und besteht aus einem am Haltering 1 befestigten Schaftteil 9a, an dem die zum Außenumfang des Halteringes 1 gerichtete Einhängeöffnung 11 für das umgebogene lösbare hakenförmige Ende 12 des Halteringes 1 als endseitig offener Schlitz ausgebildet ist, und aus einem darauf aufgesetzten Auffangtrichter 9b für das umgebogene lösbare Ende 12 des Halteringes, der mit dem Schaftteil 9a zumindest stellenweise, z. B. durch Punktschweißung, fest verbunden ist.

Eine besonders feste und sichere Verbindung zwischen den beiden Teilen 9a, 9b der Einhängehülse 9 kann dabei dadurch hergestellt werden, daß der Auffangtrichter 9b mit einer im wesentlichen parallelwandigen Befestigungstülle 9c auf dem im Querschnitt etwa ovalen Schaftteil 9a der Einhängehülse 9 sitzt, wobei das Einschieben des gegenüberliegenden lösbaren Endes 12 des Halteringes 1 in die Einhängehülse 9 noch dadurch verbessert wird, daß der Auffangtrichter 9b in einem Winkel 9d von etwa 25° bis 40°, vorzugsweise etwa 30°, beiderseits der zur Radachse parallelen Symmetrieebene 9e des Auffangtrichters 9b jeweils nach außen aufgeweitet ist. Die Befestigungstülle 9c des Auffangtrichters 9b bildet dabei zugleich den vorderen Abschluß 11b der Einhängeöffnung 11 am Schaftteil 9a der Einhängehülse 9. Am hakenförmig umgebogenen Ende 12 des Halteringes 1 befindet sich ein Anschlagring 21 für den unmittelbar daneben angeordneten Seitenhaken 4 des Kettennetzes.

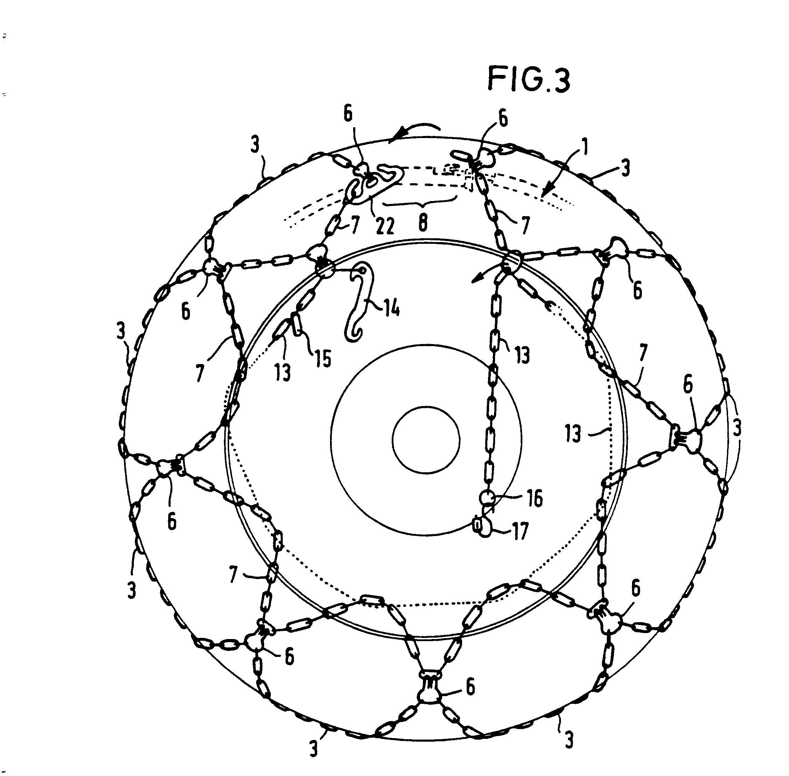

Wie Fig. 3 und 5 zeigen, ist an der Reifenaußenseite neben der Seitenkette 7 eine Spannkette 13 mit einem neben der Hakenverbindung 8 der Seitenkette 7 liegenden hakenförmigen Spannhebel 14 vorgesehen, der durch ein Glied der Spannkette 13 hindurchgeführt und in einen Haltering 15 eingehängt wird, woraufhin die an ihrem freien Ende mit einem Sicherungsring 16 versehene restliche Spannkette 13, die an der Seitenkette 7 im wesentlichen über deren gesamte Länge vormontiert ist, um sich selbst und die Seitenkette 7 herumgeschlungen und mit ihrem Befestigungshaken 17 festgelegt werden kann.

Wie anhand von Fig. 3 bis 5 weiterhin zu erkennen ist, ist der das Kettennetz schließende Haken an der Reifenaußenseite als Doppelhaken 22 mit einer zwischen seinen beiden gegenüberliegenden Hakenschenkeln 23, 24 liegenden Öffnung 25 für die beiden Zinken des Seitenhakens 6 des benachbarten Kettennetzes 3 ausgebildet und weist mit seinen beiden Hakenschenkeln 23, 24 derart zum Reifenumfang 10, daß der eine Hakenschenkel 23 das neben dem Spannbügel 14 liegende Endglied 26a der Seitenkette 7 aufnimmt und in den anderen Hakenschenkel 24 das zugleich die Trennstelle des Kettennetzes schließende gegenüberliegende Endglied 26b der Seitenkette 7 einhängbar ist.

**Patentansprüche**

1. Gleitschutzkette für Fahrzeugräder, insbesondere Spurkreuzkette, mit einem an der Reifeninnenseite angeordneten, an einer Stelle offenen, durch eine Hakenverbindung (9) schließbaren Haltering (1) aus Federstahldraht, an dem die Netzteile (3) der Kette mittels Seitenhaken (4) aufgereiht und durch auf den Haltering aufgeschobene Schlauchstücke (15) in gleichmäßigem Abstand gehalten sind, während an der Reifenaußenseite eine, vorzugswei durch eine Hakenverbindung (8) schließbare, Seitenkette (7) vorgesehen ist, in die die Netzteile (3) mit Seitenhaken (6) eingehängt sind, dadurch gekennzeichnet, daß der Haltering (1) eine an der Reifeninnenseite anliegende, an ihrem offenen Ende trichterförmig nach außen aufgeweitete Einhängehülse (9) mit einer zum Reifenumfang (10) gerichteten Einhängeöffnung (11) für das zum Reifenumfang hakenförmig nach außen umgebogene andere Ende (12) des unter Federspannung stehenden Halteringes (1) aufweist.

2. Gleitschutzkette nach Anspruch 1, dadurch gekennzeichnet, daß der Haltering (1) ein im wesentlichen hakenförmig umgebogenes Ende (1a) zur festen Verbindung mit der Einhängehülse (9) aufweist, daß die Einhängehülse (9) entsprechend der Materialdicke (1b) und dem Bogenaußendurchmesser (1c) des umgebogenen Endes (1a) des Halteringes (1) mit einem im Wesentlichen ovalen Innenquerschnitt ausgebildet ist, und daß der benachbarte Seitenhaken (4a) des Kettennetzes auf dem Haltering (1) neben der Einhängehülse (9) frei drehbar angeordnet ist. (Fig. 6, 7 und 9)

3. Gleitschutzkette nach Anspruch 1 und 2, dadurch gekennzeichnet, daß das in der Einhängehülse (9) befestigte Ende (1a) des Halteringes (1) zum Ringinneren hin umgebogen ist und mit seinem Scheitelpunkt etwa bis zum rückwärtigen Ende (11a) der Einhängeöffnung (11) in den Schaft der Einhängehülse (9) hineinragt. (Fig. 6, 7 und 8)

4. Gleitschutzkette nach Anspruch 1 bis 3, dadurch gekennzeichnet, daß die Einhängehülse (9) aus einem am Haltering (1) befestigten Schaftteil (9a) mit der zum Außenumfang des Halteringes (1) gerichteten Einhängeöffnung (11) für das umgebogene lösbare hakenförmige Ende (12) des Halteringes (1) und aus einem darauf aufgesetzten Auffangtrichter (9b) für das umgebogene lösbare Ende (12) des Halteringes (1) besteht, der mit dem Schaftteil (9a) zumindest stellenweise fest verbunden ist. (Fig. 6 bis 9)

5. Gleitschutzkette nach Anspruch 1 bis 4, dadurch gekennzeichnet, daß der Auffangtrichter (9b) mit einer im wesentlichen parallelwandigen Befestigungstülle (9c) auf dem im Querschnitt etwa ovalen Schaftteil (9a) der Einhängehülse (9) sitzt. (Fig. 6 bis 9)

6. Gleitschutzkette nach Anspruch 1 bis 5, dadurch gekennzeichnet, daß der an die Befestigungstülle (9c) anschließende Auffangtrichter (9b) in einem Winkel (9d) von etwa 25° bis 40°, vorzugsweise etwa 30°, beiderseits der zur Radachse parallelen Symmetrieebene (9c) des Auffangtrichters (9b) jeweils nach außen aufgeweitet ist. (Fig. 6)

7. Gleitschutzkette nach Anspruch 1 bis 6, dadurch gekennzeichnet, daß die Befestigungstülle (9c) des Auffangtrichters (9b) den vorderen Abschluß (11b) der

Einhängeöffnung (11) am Schaftteil (9a) der Einhängehülse (9) bildet. (Fig. 6 und 7)

8. Gleitschutzkette nach einem der Ansprüche 1 bis 7, dadurch gekennzeichnet, daß der Auffangtrichter (9b) mit dem Schaftteil (9a) der Einhängehülse (9) durch Punktschweißung verbunden ist.

9. Gleitschutzkette nach einem der Ansprüche 1 bis 8, dadurch gekennzeichnet, daß zum hakenförmig umgebogenen Ende (12) des Halteringes (1) hin ein Anschlagring (21) für den unmittelbar danben befindlichen Seitenhaken (4) des Kettennetzes angeordnet ist. (Fig. 1, 2, 4, 6, 7 und 9)

10. Gleitschutzkette nach einem der Ansprüche 1 bis 9, dadurch gekennzeichnet, daß an der Reifenaußenseite neben der Seitenkette (7) eine Spannkette (13) mit einem neben der Hakenverbindung (8) der Seitenkette (7) liegenden hakenförmigen Spannhebel (14) vorgesehen ist. (Fig. 3 und 5)

11. Gleitschutzkette nach Anspruch 10, dadurch gekennzeichnet, daß die Spannkette (13) einen endseitigen Sicherungsring (16) aufweist und an der Seitenkette (17) im wesentlichen über deren gesamte Länge unverlierbar montiert ist. (Fig. 3 und 5)

12. Gleitschutzkette nach einem der Ansprüche 1 bis 11, dadurch gekennzeichnet, daß der das Kettennetz schließende Haken an der Reifenaußenseite als Doppelhaken (22) mit einer zwischen seinen beiden gegenüberliegenden Hakenschenkeln (23, 24) befindlichen Öffnung (25) für die beiden Zinken des Seitenhakens (6) des benachbarten Kettennetzes ausgebildet und mit seinen beiden Hakenschenkeln (23, 24) zum Reifenumfang (10) hin derart angeordnet ist, daß der eine Hakenschenkel (23) das neben dem Spannhebel (14) liegende Endglied (26a) der Seitenkette (7) aufnimmt und in den anderen Hakenschenkel (24) das zugleich die Trennstelle des Kettennetzes schließende gegenüberliegende Endglied (26b) der Seitenkette (7) einhängebar ist. (Fig. 3 und 5)

**Claims**

1. An anti-skid tyre chain for motor vehicles, with cross-track spans to give good traction, the chain being braced on the inside of the tyre by a spring-steel wire bracing ring (1) open at one location and closed by a hook connector (9); the spans (3) of the chain being connected, on the inside of the tyre, by side-hooks (4) to the bracing ring (1) and spaced apart at regular intervals by tubes (5) pushed over the bracing ring (1); the chain being braced on the outside of the tyre by a side-chain (7) closed by a hook-connector (8); the spans (3) of the chain being connected on the outside of the tyre to the side-chain (7) by side-hooks (6), characterised in that the hook-connector (9) fixed to one end of the bracing ring (1) and used for closing the bracing ring (1) rests against the inside wall of the tyre and has a funnel-shaped mouth for receiving the other end of the bracing ring (1), which is in the form of a hook (12) bent outwards towards the periphery (10) of the tyre; the hook-connector (9) having a slot (11) opening outwards, towards the periphery (10) of the tyre, for receiving the hook (12); the bracing ring (1) tending to open out resiliently.

2. Anti-skid tyre chain as claimed in Claim 1, characterised in that one end (1a) of the bracing ring (1) is bent around to form a hook which is fixed to the hook-connector (9); which itself has an elongated, substantially oval cross section whose smaller internal diameter (1b) is substantially the wire thickness of the hook, its larger internal diameter (1c) being the outer diameter of the curvature of the hook; the neighbouring side-hook (4a) of the chain hooking, free to rotate, over the bracing ring (1) behind the hook-connector (9) (Figures 6, 7 and 9).

3. Anti-skid tyre chain as claimed in Claims 1 and 2, characterised in that the end (1a) of the bracing ring (1) fixed to the hook-connector (9) is bent around inwards, towards the middle of the bracing ring (1), to form a hook, which is pushed inwards, in the manufacture of the chain, into the interior of the hollow shank (9a) of the hook-connector (9) until the crest of curvature of the hook reaches the back-end (11a) of the slot (11) (Figures 6, 7 and 8).

4. Anti-skid tyre chain as claimed in Claims 1 to 3, characterised in that the hook-connector (9) comprises a hollow shank (9a) fixed to one end (1a) of the bracing ring (1) and having a slot (11) facing outwards towards the periphery (10) of the tyre, for receiving a hook (12) on the other end of the bracing ring (1) and, fitting over the hollow shank (9a), a receiver-funnel (9b) for guiding the entry of the hook (12), the receiver funnel (9b) being fixed to the hollow shank (9a) at least locally by spot-welding (Figures 6 and 9).

5. Anti-skid chain as claimed in Claims 1 to 4, characterised in that the receiver funnel (9b) has a parallel-sided socket-neck (9c) which fits over the shank (9a), substantially oval in cross section, of the hook-connector (9) (Figures 6 to 9).

6. Anti-skid tyre chain as claimed in Claims 1 to 5, characterised in that the receiver funnel (9b) opens to form an aperture angle of 25 to 40°, preferably about 30°, centered on a plane of symmetry (9c) extending parallel to the axis of the wheel of the vehicle (Figure 6).

7. Anti-skid tyre chain as claimed in Claims 1 to 6, characterised in that the socket-neck (9c) forms the forward end (11b) of the slot (11) in the shank (9a) of the hook-connector (9) (Figures 6 and 7).

8. Anti-skid tyre chain as claimed in one of the Claims 1 to 7, characterised in that the receiver-funnel (9b) is fixed to the shank (9a) of the hook-connector (9) by spot-welding.

9. Anti-skid tyre chain as claimed in one of the Claims 1 to 8, characterised in that the hook (12) on the other end of the bracing ring (1) has a stop-ring (21) for retaining the neighbouring side-hook (4) of the chain (Figures 1, 2, 4, 6, 7 and 9).

10. Anti-skid tyre chain as claimed in one of the Claims 1 to 9, characterised in that at the outside of the tyre the side-chain (7) is tautened by a tautening chain (13) which is itself tautened, near a double-hook connection (8) of the side-chain (7), by a tautening hook (14) (Figures 3 and 5).

11. Anti-skid tyre chain as claimed in Claim 10, characterised in that the tautening chain (13) terminates in a retainer ring (16) and is threaded unlosably through substantially the entire length of the side-chain (7) (Figures 3 and 5).

12. Anti-skid tyre chain as claimed in one of the Claims 1 to 11, characterised in that the hook-connection (8) which closes the chain on the outside of the tyre is in the form of a double hook (22) with two wings (23) and (24) between which there is an eye (25) into which hook the two prongs of the side-hook (6) of the neighbouring chain span; the two wings (23, 24) being directed outwards towards the periphery (10) of the tyre; the one wing (23) hooking into one end-link (26a) of the side-chain (7), near the tautening hook (14), the other wing (24) hooking into the other end-link (26b) of the side-chain (7) (Figures 3 and 5).

### Revendications

1. Chaîne de protection anti-dérapage pour roues de véhicule, notamment une chaîne réticulée, comportant un anneau de retenue (1) en fil d'acier à ressort, disposé sur le côté intérieur du pneumatique, ouvert en un endroit, pouvant être fermé par une liaison à crochets (9) et sur lequel les parties de réseau (3) de la chaîne sont alignées au moyen de crochets latéraux (4) et sont maintenues avec un espacement uniforme par des éléments de flexible (5) emmanchés sur l'anneau de retenue, tandis qu'il est prévu sur le côté extérieur du pneumatique une chaîne latérale (7), pouvant avantageusement être fermée au moyen d'une liaison à crochets (8) et dans laquelle sont accrochées les parties de réseau (3) au moyen de crochets latéraux (6), caractérisée par le fait que l'anneau de retenue (1) comporte un manchon d'accrochage (9), s'appliquant sur le côté intérieur du pneumatique, élargi vers l'extérieur en forme d'entonnoir à son extrémité ouverte et pourvu d'une ouverture d'accrochage (11), dirigée vers la périphérie du pneumatique (10), pour l'autre extrémité (12), recourbée vers l'extérieur en forme de crochet vers la périphérie du pneumatique, de l'anneau de retenue (1) soumis à une tension élastique.

2. Chaîne de protection anti-dérapage selon la revendication 1, caractérisée par le fait que l'anneau de retenue (1) comporte une extrémité (1a), recourbée sensiblement en forme de crochet pour une liaison solide avec le manchon d'accrochage (9), que le manchon d'accrochage (9) est pourvu, en correspondance avec l'épaisseur de matière (1b) et le diamètre extérieur (1c) de l'extrémité recourbée (1a) de l'anneau de retenue (1), d'une section intérieure sensiblement ovale et que le crochet latéral adjacent (4a) du réseau de chaîne est disposé de façon librement tournante sur l'anneau de retenue (1) à côté du manchon d'accrochage (9) (figures 6, 7 et 9).

3. Chaîne de protection anti-dérapage selon les revendications 1 et 2, caractérisée par le fait que l'extrémité (1a), fixée dans le manchon d'accrochage (9), de l'anneau de retenue (1) est recourbée vers l'intérieur de l'anneau et pénètre par son sommet à peu près jusqu'à l'extrémité arrière (11a) de l'ouverture d'accrochage (11) dans le corps du manchon d'accrochage (9) (figures 6, 7 et 8).

4. Chaîne de protection anti-dérapage selon les revendications 1 à 3, caractérisée par le fait que le manchon d'accrochage (9) se compose d'une partie-corps (9a) fixée sur l'anneau de retenue (1) et comportant une ouverture d'accrochage (11) dirigée vers la périphérie extérieure de l'anneau de retenue (1) , pour l'extrémité recourbée en forme de crochet et séparable (12) de l'anneau de retenue (1), et d'un entonnoir d'introduction (9b), placé au-dessus, pour l'extrémité recourbée séparable (12) de l'anneau de retenue (1), qui est relié rigidement, au moins par endroit, avec la partie-corps (9a) (figures 6 à 9).

5. Chaîne de protection anti-dérapage selon les revendications 1 à 4, caractérisée par le fait que l'entonnoir d'introduction (9b) est monté au moyen d'une douille de fixation (9c) à parois sensiblement parallèles, sur la partie-corps (9a), ayant une section droite à peu près ovale, du manchon d'accrochage (9) (figures 6 à 9).

6. Chaîne de protection anti-dérapage selon les revendications 1 à 5, caractérisée par le fait que l'entonnoir d'introduction (9b) relié à la douille de fixation (9c) est élargi vers l'extérieur selon un angle (9d) d'environ 25° à 40°, de préférence d'environ 30°, de chaque côté du plan de symétrie (9c), parallèle à l'axe de roue, de l'entonnoir d'introduction (9b).

7. Chaîne de protection anti-dérapage selon les revendications 1 à 6, caractérisée par le fait que la douille de fixation (9c) de l'entonnoir d'introduction (9b) constitue la fermeture avant (11b) de l'ouverture d'accrochage (11) prévue dans la partie-corps (9a) du manchon d'accrochage (9).

8. Chaîne de protection antidérapage selon une des revendications 1 à 7, caractérisée par le fait que l'entonnoir d'introduction (9b) est relié à la partie-corps (9a) du manchon d'accrochage (9) par soudage par points.

9. Chaîne de protection antidérapage selon une des revendications 1 à 8, caractérisée par le fait qu'il est prévu autour de l'extrémité (12), recourbée en forme de crochet, de l'anneau de retenue (1), un anneau de butée (21) pour le crochet latéral (4), situé immédiatement à côté, du réseau de chaîne (figures 1, 2, 4, 6, 7 et 9).

10. Chaîne de protection anti-dérapage selon une des revendications 1 à 9, caractérisée par le fait qu'il est prévu sur le côté extérieur du pneumatique, outre la chaîne latérale (7), une chaîne de tension (13) comportant un levier de tension (14) en forme de crochet, placé au voisinage de la liaison à crochets (8) de la chaîne latérale (7) (figures 3 et 5).

11. Chaîne de protection anti-dérapage selon la revendication 10, caractérisée par le fait que la chaîne de tension (13) comporte un anneau de fixation (16) à son extrémité et elle est montée sur la chaîne latérale (7) de façon à peu près inséparable sur toute sa longueur (figures 3 et 5).

12. Chaîne de protection anti-dérapage selon une des revendications 1 à 11, caractérisée par le fait que le crochet, fermant le réseau de chaîne, situé sur le côté extérieur du pneumatique est agencé comme un double crochet (22) comportant une ouverture (25), située entre ses deux branches opposées (23, 24), pour les deux dents du crochet latéral (6) du réseau de chaîne adjacent et il est disposé avec ses deux branches de crochet (23, 24) dirigées vers la périphérie du pneumatique (10) de telle sorte qu'une des branches de crochet (23) reçoive l'organe extrême (26a) de la chaîne latérale (7) qui est situé à côté du levier de tension (14) et que l'organe opposé (26b) de la chaîne latérale (7), assurant simultanément la fermeture de la zone de séparation du réseau de chaîne, puisse être accroché dans l'autre branche de crochet (24) (figures 3 et 5).

0 081 792

FIG.1

FIG.2

1

# FIG.3

FIG.5

FIG.4

## FIG.6

## FIG.7

## FIG.8

## FIG.9